# FASCICULE DE BREVET EUROPEEN

(11) **EP 1 493 985 B1**
(45) Date de publication et mention de la délivrance du brevet: **25.10.2006**
(21) Numéro de dépôt: 04291597.5
(22) Date de dépôt: 24.06.2004
(51) Int. Cl.: F41A 27/30, F16F 15/00

(54) **Dispositif d'amortissement actif des oscillations d'une arme par motorisation secondaire accordée**
Vorrichtung zur aktiven Dämpfung von Schwingungen einer Waffe
Device for the active attenuation of vibrations of a gun

(30) Priorité: 02.07.2003 FR 0308046
(43) Date de publication de la demande: 05.01.2005
(73) Titulaire: GIAT Industries, 78000 Versailles (FR)
(72) Inventeur: Claquin, Jean-Yves, 78390 Bois d'Arcy (FR)
(74) Mandataire: Célanie, Christian

(56) Documents cités:
- DE-A- 2 605 476
- DE-B- 2 240 569
- FR-A- 2 192 665

## Description

Le secteur technique de la présente invention est celui des asservissements, et plus particulièrement, celui de l'amortissement actif des modes de déformation d'une structure.

Une application est envisagée et plus particulièrement décrite pour le pointage d'une arme et l'amortissement de cette arme, notamment dans le cadre du tir en marche.

On s'intéresse aux systèmes d'armes, principalement de type canon, montés sur un moyen d'orientation, de type tourelle, affût ou pod. Ces systèmes d'arme peuvent fonctionner en coup par coup ou en tir en cadence («armes automatiques») et, le cas échéant, être montés sur un véhicule pouvant se déplacer.

Ces systèmes sont très sensibles à toute excitation dynamique, que celle-ci provienne du tir en cadence ou qu'elle soit occasionnée par les accélérations induites par les mouvements du véhicule support, par exemple le roulage en terrain varié. Les premiers modes susceptibles d'être excités se trouvent typiquement dans la plage 10 à 30 Hz.

Un système d'arme, dont la raideur est pratiquement limitée et non infinie, est équipé d'un asservissement qui permet d'obtenir une orientation/pointage de l'arme peu sensible aux perturbations de roulage. Les perturbations dues au roulage apparaissent, pour leur aspect le plus important, sous forme de perturbations en vitesse angulaire ou en accélération du support de l'arme. Lorsque l'on est en présence d'une arme équilibrée, c'est-à-dire d'une arme dont le centre de gravité est situé sur l'axe de rotation, ou proche de celui-ci, les perturbations dues au roulage nuisent assez peu à la qualité de l'orientation de l'arme. Mais, dans le cas le plus fréquent, l'arme ne peut pas, dans la pratique, être équilibrée.

Dans le cas d'une arme lourde, par exemple une arme de gros calibre, l'élasticité propre du tube fait apparaître une fréquence propre de son premier mode proche des fréquences de bouclage des asservissements. Il s'ensuit une résonance qui limite les possibilités et la qualité des asservissements et par voie de conséquence à l'origine de la dégradation de la précision de tir de l'arme.

De plus, cette résonance peut être à l'origine de déformations dynamiques du tube de l'arme de plusieurs milliradians. Ainsi, lorsque ces modes de résonance sont excités, la précision du tir est encore dégradée.

Les systèmes d'armes sont actuellement spécifiés pour offrir une performance de tir en marche, ou encore tir en mouvement, de qualité voisine de celle du tir à l'arrêt.

Pour pallier les conséquences néfastes sur la performance de précision du tir des effets de ces déformations dynamiques, plusieurs solutions sont connues. Une première approche consiste à observer la déformation et à choisir en conséquence l'instant précis du déclenchement du tir. Une seconde approche consiste à maîtriser la déformation dynamique afin de la réduire et donc d'en réduire l'incidence sur la précision du tir.

La première approche est connue sous le vocable de «fenêtre de tir». Un moyen permettant de mesurer ou d'estimer en temps réel la déformation dynamique de l'arme, sur les deux voies site et gisement, est utilisé. Les mesures de déformation instantanée sont utilisées pour optimiser l'instant de la mise de feu. Dans la pratique, ces systèmes permettent de diminuer le risque de mise de feu aux positions extrêmes des déformations. Cependant, l'amélioration obtenue est limitée et ne permet pas de s'approcher suffisamment du besoin.

Dans la seconde catégorie de solutions, on agit sur la déformation en tentant de la maîtriser, notamment en en diminuant l'amplitude, par «amortissement» de l'effet de résonance. Pour cela, plusieurs approches sont possibles. On peut distinguer les approches passives et les approches actives.

L'amortissement passif consiste, par exemple, à fixer sur le tube des résonateurs amortis constitués par des masselottes, positionnées sur les ventres de résonance et reliées radialement au tube par une liaison élastique et amortissante. Dans la pratique, cette approche est difficile à réaliser et à mettre au point. La présence des résonateurs et leur liaison au tube modifiant très fortement le comportement naturel de l'arme au tir.

Une autre solution, désignée amortissement actif, consiste à utiliser une motorisation pour appliquer, à la fréquence de la résonance à amortir, sur l'arme ou sur la tourelle, un couple de réaction proportionnel et opposé à la vitesse de la déformation. Cette opération vise à réduire l'énergie du mode concerné et provenant des perturbations induites par le tir en cadence ou par le roulage.

Pour réaliser une stabilisation permanente de l'arme par amortissement actif, il est connu d'utiliser une motorisation électrique. Ce principe de motorisation permet de n'avoir à fournir à une arme équilibrée que l'énergie nécessaire pour vaincre les frottements dans le système de pointage et d'orientation de l'arme.

L'amortissement actif consiste à commander dans la transmission un couple de motorisation, fonction de la vitesse d'arcure de l'arme. Cette dernière vitesse peut être mesurée ou calculée.

Il est connu pour appliquer ce couple d'amortissement, en utilisant la motorisation principale existante qui assure déjà l'orientation et le pointage de l'arme. Cette approche présente des inconvénients. Le principal inconvénient est de réutiliser une motorisation existante et dimensionnée en fonction d'autres contraintes et particulièrement des vitesses maximales de pointage de l'arme. Un tel dimensionnement peut être en contradiction avec les besoins propres liés à l'amortissement actif.

La présente invention remédie à ces différents inconvénients par un amortissement actif de la résonance du tube réalisé par une motorisation dédiée, distincte de la motorisation de pointage et accordée avec le mode de résonance que l'on cherche à amortir.

L'invention a pour objet une structure comprenant un dispositif d'amortissement actif des oscillations d'une arme comprenant un tube présentant une fréquence de résonance ω_{n procédé} à amortir et mis en rotation autour d'un axe site ou gisement par un motoréducteur principal par rapport à une tourelle ou un bâti, caractérisé en ce que le dispositif d'amortissement a une faible consommation énergétique et comprend un motoréducteur secondaire comprenant un moteur et une transmission, ledit motoréducteur secondaire appliquant en parallèle au motoréducteur principal un couple déterminé par une loi de commande, et étant accordé avec le mode de résonance à amortir.

Selon une autre caractéristique, la fréquence de résonance ω_{n moteur} de l'inertie du moteur sur l'élasticité de la transmission est proche de la fréquence de résonance ω_{n procédé} du tube.

Selon une autre caractéristique, la transmission du motoréducteur secondaire présente un jeu apparent vu du tube inférieur à un centième de milliradian.

Selon une autre caractéristique, la loi de commande comprend une première boucle asservissant le motoréducteur secondaire en couple et peut comprendre une seconde boucle d'asservissement utilisant en entrée une vitesse d'arcure du tube mesurée par un capteur de vitesse d'arcure.

Selon une autre caractéristique, la loi de commande comprend une seconde boucle d'asservissement utilisant en entrée une vitesse d'arcure estimée par un modèle de comportement du tube en flexion.

Selon une autre caractéristique, le modèle de comportement du tube en flexion estimant la vitesse d'arcure comprend un gyromètre placé sur le masque de l'arme pour assurer le recalage du modèle d'estimation de la vitesse d'arcure.

Un avantage du dispositif selon l'invention est de mettre en oeuvre une motorisation secondaire très largement sous dimensionnée en puissance, par rapport à la motorisation principale, du fait qu'elle n'intervient que pour assurer l'amortissement actif.

Un autre avantage du dispositif selon l'invention est de nécessiter une motorisation secondaire très largement sous dimensionnée en puissance, par rapport à la motorisation principale, du fait qu'elle est accordée.

Un autre avantage encore du dispositif selon l'invention est que le dimensionnement réduit de la motorisation secondaire, dédiée à l'amortissement conduit à une inertie faible de cette motorisation, qui permet de réduire encore la consommation énergétique propre à l'amortissement actif et donc le dimensionnement en puissance de celle-ci.

Un autre avantage encore du dispositif selon l'invention est de ne pas nécessiter de modification de la motorisation principale de pointage.

Un autre avantage encore du dispositif selon l'invention est de permettre une optimisation de la motorisation principale de pointage (site et gisement) en faisant abstraction des contraintes propres à l'amortissement actif.

D'autres caractéristiques, détails et avantages de l'invention ressortiront plus clairement de la description détaillée donnée ci-après à titre indicatif en relation avec des dessins sur lesquels :
- la figure 1 présente une vue de profil, d'une arme montée dans une tourelle,
- la figure 2 présente une vue de dessus, de cette même arme montée dans la tourelle,
- la figure 3 précise la définition de l'arcure,
- la figure 4 illustre la modélisation retenue pour le tube et le principe de la loi de commande utilisée pour amortir sa résonance,
- la figure 5 présente la courbe asymptotique du ratio entre le courant et le couple en fonction de la pulsation (fréquence),
- la figure 6 présente la même courbe dans le cas particulier d'un accord de la transmission.

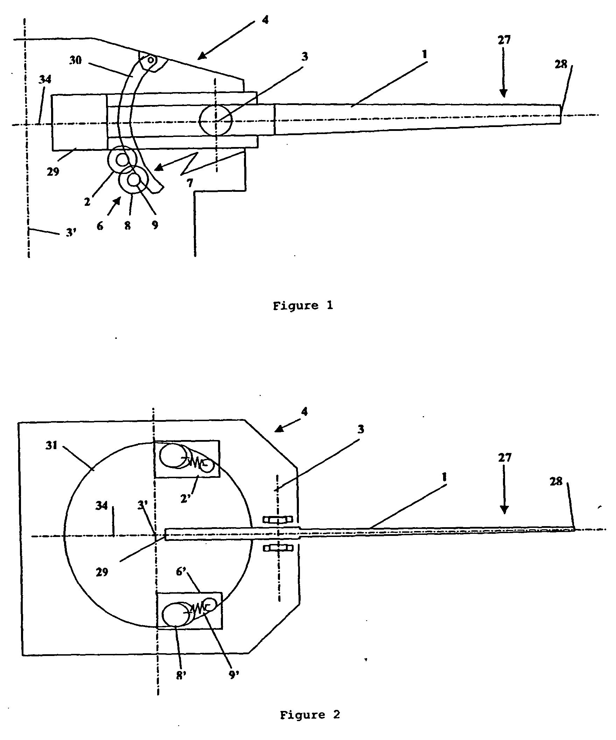

Selon la figure 1, une arme 27 présente un tube 1 libre à une extrémité 28 encore appelée bouche, et solidaire de la tourelle 4 à l'autre extrémité 29 encore dénommée masque. Le tube 1 est mobile en rotation autour d'un axe de tourillonnement 3, horizontal et transversal à l'axe longitudinal de symétrie du tube, permettant l'orientation ou pointage en site de l'arme. Cet axe 3 de rotation est matérialisé par des tourillons 3 solidaires du tube 1 formant des portées cylindriques pouvant tourner par rapport à des paliers solidaires de la tourelle. Une motorisation principale 2, solidaire de l'arme et venant engrener sur un secteur denté 30 solidaire de la tourelle, permet la mise en mouvement et l'orientation du tube 1 en site autour de l'axe 3. De manière similaire, la motorisation principale 2 peut être solidaire de la tourelle 4 et venir engrener sur un secteur denté 30 solidaire de l'arme, ou encore être constituée d'un vérin dont une extrémité est solidaire de l'arme et l'autre extrémité de la tourelle. Cette motorisation principale 2 est assurée par un motoréducteur 2. Ce motoréducteur 2 peut comprendre un moteur électrique ou hydraulique, un vérin électrique ou hydraulique, un moteur couple ou tout autre dispositif moteur équivalent.

Dans un mode de réalisation particulier, donné à titre illustratif, le motoréducteur est constitué d'un moteur électrique tournant à une vitesse moyenne, de l'ordre de 400 tr/mn, couplé à un réducteur présentant un rapport de réduction compris entre 475 et 550 permettant d'adapter la puissance du moteur à la vitesse maximale de rotation de la charge (ici l'arme).

La motorisation est asservie selon une loi de commande que l'on établit suivant le type d'arme. Ce genre d'algorithme est bien connu de l'homme du métier.

Un second motoréducteur 6, comprenant un moteur 8 et une transmission 9 munie essentiellement d'un réducteur 9 est monté de manière similaire, en parallèle à la motorisation principale 2, par exemple en engrenant au niveau dudit secteur denté 30, de façon à pouvoir appliquer un couple sur le tube 1, dans la direction du mouvement angulaire en site. Ce motoréducteur secondaire 6 est asservi selon une loi de commande d'amortissement 7.

Il est à noter que chacun des deux axes site et gisement est traité de façon similaire et de manière quasiment indépendante. Chaque ensemble de positionnement en site et en gisement dispose de sa motorisation principale 2 pour le site ou 2' pour le gisement et de sa motorisation secondaire 6 pour le site ou 6' pour le gisement dédiée à l'amortissement de la composante de vibration en flexion du tube 1 selon son axe site ou gisement.

Sur la figure 2, qui représente une vue de dessus, on illustre le fonctionnement en gisement de l'arme. L'ensemble de la tourelle 4 portant l'arme est mobile en rotation autour d'un axe gisement 3' vertical. Les tourillons 3 ne présentant pas de degrés de liberté dans le plan horizontal, l'arme et le tube 1 sont entraînés en rotation avec la tourelle et les tourillons agissent en gisement comme un encastrement. Classiquement, une couronne dentée 31, centrée sur l'axe de rotation gisement 3', reçoit l'engrènement d'un pignon entraîné par la motorisation principale 2'. La couronne dentée 31 est solidaire de la tourelle 4 et la motorisation principale 2' du bâti, ou inversement. Le bâti désigne ici la caisse du véhicule porteur ou la structure de l'affût ou du pod. Cette disposition permet d'exercer, lorsque la motorisation 2' fonctionne, un couple entre le bâti et la tourelle 4 assurant la mise en rotation selon le gisement de ladite tourelle 4.

La motorisation secondaire 6', chargée d'appliquer un couple d'amortissement en gisement, vient de manière analogue engrener, en n'importe quel point de la couronne dentée 31. Le motoréducteur secondaire 6' est asservi selon une loi de commande d'amortissement 7'. Il comprend un moteur 8' et un réducteur 9'.

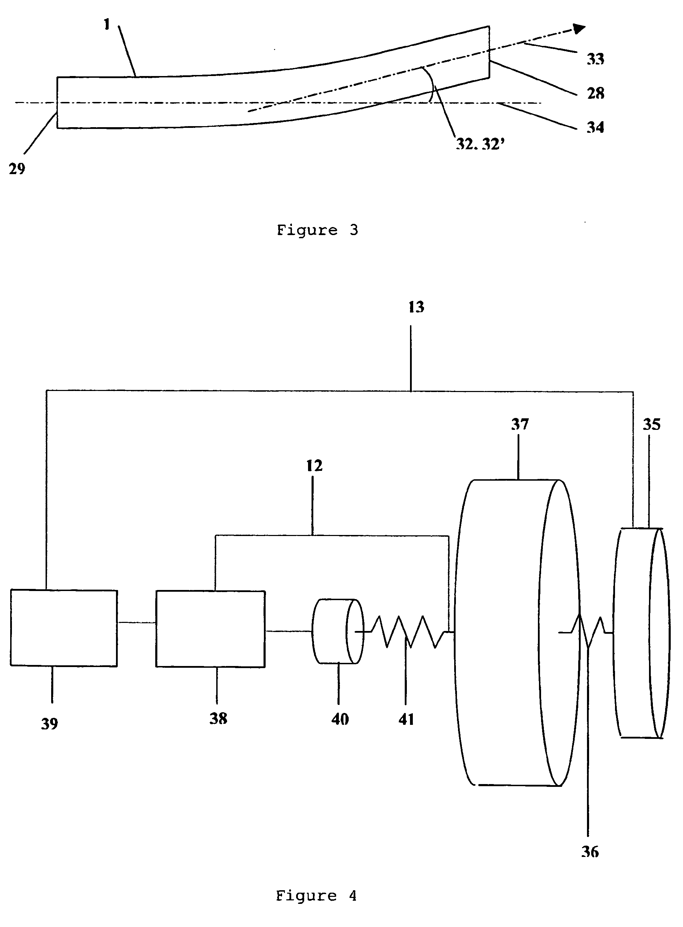

Le tube 1 est équivalent à une poutre flexible fixée par une de ses extrémités 29 à la tourelle 4. Sa déformation peut se caractériser par la mesure de l'arcure 32. L'arcure, comme indiqué sur la figure 3, est l'angle que fait l'axe 33 du tube 1 au niveau de la bouche 28 avec l'axe longitudinal 34 théorique neutre du tube 1 de l'arme. On peut utiliser soit l'arcure 32 soit la vitesse d'arcure 32' qui s'en déduit par dérivation par rapport au temps. Le tube 1 présente un certain nombre de fréquences de résonance de flexion du fait de son élasticité en flexion. La direction d'un tir résulte directement de l'orientation de l'axe 33 du tube 1 au niveau de la bouche 28 au moment du passage du projectile lors du tir. Pour maintenir un niveau de qualité de la précision du tir, il est nécessaire de maîtriser ou du moins de connaître la flexion du tube 1.

La première fréquence (la plus basse) de résonance ωₙ procédé ou premier mode de résonance ω_{n procédé} peut se situer à une fréquence relativement basse. Pour une arme lourde, l'élasticité du tube fait apparaître un premier mode à une fréquence de l'ordre de 20 Hertz, proche des fréquences de bouclage des asservissements. La résonance qui s'en suit limite les possibilités et la qualité des asservissements de stabilisation et par suite dégrade la précision de l'arme et du tir. Il convient, pour une bonne performance, de réduire au minimum, les effets de cette résonance.

Cette fréquence de résonance ω_{n procédé} présente une sensibilité élevée aux accélérations radiales. On désigne par radiales les directions orthogonales à l'axe 34 de l'arme ou axe longitudinal. Ces accélérations radiales sont principalement causées par les déplacements du véhicule supportant la tourelle 4 et notamment son pilonnement. Ce premier mode de flexion ω_{n procédé} est également sensible aux couples de la motorisation principale 2, 2' de pointage mise en place pour orienter l'arme dans l'espace ou encore aux couples et efforts induits par le tir automatique en cadence.

Afin de réduire les effets négatifs de la résonance, un principe d'amortissement de la résonance ω_{n procédé} du tube 1, réalisé par une motorisation, est retenu (amortissement actif).

Par principe élémentaire connu aussi bien des mécaniciens que des automaticiens, on sait qu'un système mécanique constitué par une masse fixée sur un ressort (respectivement une inertie sur une raideur angulaire), est amorti par une force appliquée sur la masse (respectivement un couple sur l'inertie), proportionnelle à la vitesse linéaire de la masse (respectivement la vitesse angulaire de l'inertie).

Lorsqu'on s'intéresse au système résonant constitué par le tube d'une arme assimilé à une poutre flexible, ancrée dans le bloc inertiel de la culasse, le modèle équivalent le plus simple correspond à deux masses inertielles reliées par un ressort. Le moyen théorique le plus simple et le plus naturel pour amortir ce type de système consiste à créer un effet amortisseur placé entre les deux masses. En pratique, une solution peut correspondre à exercer un effort radial, passif ou commandé, dans la zone du ventre du mode flexible à amortir, en prenant appui sur un manchon. Ce manchon peut être une masse inerte ou un ancrage sur le berceau de l'arme et prenant appui sur l'arme au niveau du noeud secondaire avant de l'arme. Un tel effort, fonction de la vitesse relative entre le ventre et le manchon aurait l'effet amortissant désiré. Cependant, l'appui nécessaire est difficilement réalisable ou sa réalisation trop contraignante sur l'architecture de l'arme.

Amortir la résonance de l'arme par un couple appliqué directement sur la partie arrière de l'arme est également possible.

L'amortissement peut s'effectuer selon principe suivant:
- on dispose d'un système mécanique oscillant non amorti ou faiblement amorti,
- amortir ce système, ou limiter l'amplitude de résonance naturelle consiste à lui appliquer artificiellement un couple, en phase avec sa vitesse d'oscillation, proportionnel à cette vitesse et de sens opposé. Plus le coefficient de proportionnalité sera élevé, plus l'amplitude de la résonance diminuera.

La figure 4 présente, un schéma illustrant le modèle inertiel équivalent de l'arme et de la tourelle 4 que l'on désire amortir, ainsi que le principe de commande d'amortissement mis en oeuvre. En gisement, l'arme est représentée par une inertie équivalente 35, reliée à la tourelle 4 représentée par une inertie équivalente 37, par une raideur 36 représentative de l'élasticité en flexion du tube 1. La motorisation d'amortissement 6' entraîne l'inertie 37 de la tourelle 4.

Pour le site la modélisation est similaire en adaptant l'inertie 37 à la partie arrière rigide de l'arme, soit le bloc inertiel de la culasse de l'arme et son masque 29 et la raideur 36 pour qu'elle soit représentative de l'élasticité en flexion du tube 1 appuyé libre.

Le principe de motorisation et d'asservissement est identique pour les deux axes site et gisement. Un moteur site 8 ou gisement 8', d'inertie 40, entraîne en rotation la charge inertielle (tourelle et arme ou arme seule) au travers d'une transmission site 9 ou gisement 9', de raideur 41.

Une première boucle 12 asservit le moteur 8 ou 8' en couple. Le dispositif d'asservissement 38 calcule la vitesse à commander au moteur 8 ou 8' en fonction de la vitesse en sortie de la transmission 9 ou 9' fournie par la mesure en fonction du couple de consigne issu du bloc asservissement de niveau supérieur 39.

Une seconde boucle d'asservissement 13 asservit le couple à appliquer au tube en fonction de la vitesse d'arcure 32' mesurée au niveau de la bouche 28. Le bloc asservissement 39 détermine le couple d'amortissement en fonction de la déformation du tube 1 en flexion connue par la vitesse d'arcure 32'.

Pour obtenir une commande en couple de bonne qualité, mais surtout ne présentant pas de risque d'instabilité locale, il est préférable de disposer d'un réducteur sans jeu apparent entre le moteur et la charge. Dans la pratique on acceptera un réducteur tel que le jeu apparent sur la totalité de la transmission, incluant donc ledit réducteur, vu du tube, reste inférieur à un centième de milliradian.

La boucle d'asservissement 13 détermine le couple d'amortissement à fournir en entrée de consigne de la boucle d'asservissement en couple 12. Ce couple est déterminé proportionnel à une grandeur indicative de la déformation. Pour cela, on utilise une information représentative de la déformation en flexion du tube de l'arme : l'arcure 32 ou sa dérivée, la vitesse d'arcure 32'. Cette donnée caractéristique peut être soit directement mesurée sur le tube de l'arme en temps réel, soit être obtenue par un «observateur» élaboré en utilisant le modèle de calcul 21 du tube de l'arme et de son comportement à la flexion lorsqu'il est sollicité.

Afin d'assurer le recalage de ce modèle de comportement 21 permettant d'estimer la vitesse d'arcure 32', on utilise une mesure en retour fournie par un gyromètre 25 situé au niveau du masque 29.

Tout en admettant que le principe d'amortissement ne permet pas de supprimer totalement la résonance (ce qui n'est pas le but), l'intérêt véritable est bien de limiter la sensibilité du courant aux vibrations de roulage, à un domaine fréquentiel entourant immédiatement la fréquence de résonance, une atténuation forte apparaissant de part et d'autre de cette fréquence.

La véritable limitation imposée par ce type de système vient surtout du fait que les commandes en couple demandées à la motorisation doivent se matérialiser par une contrainte mécanique dans le réducteur, cette contrainte ne pouvant être réalisée que par rotation du moteur électrique et mise en torsion de la chaîne de réduction.

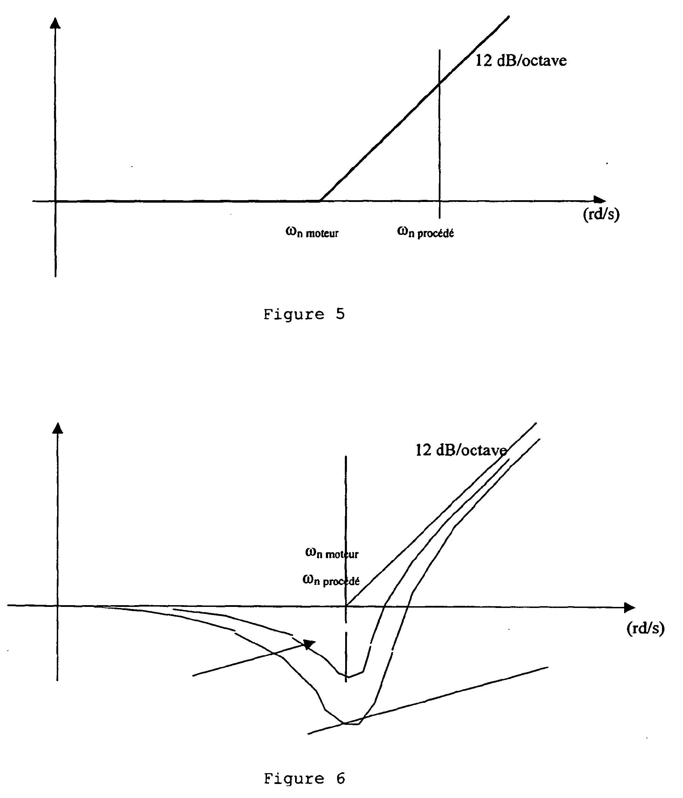

La figure 5 présente en coordonnées logarithmiques, la grandeur rapport (ou ratio) entre l'intensité du courant envoyé à un moteur électrique et le couple mécanique qu'il peut fournir en fonction de la fréquence (Hz) ou de la pulsation (rd/s). Cette courbe est représentée par convention habituelle à l'homme de l'art, symbolisée par ses asymptotes. Cette courbe fait nettement apparaître un seuil correspondant à la fréquence propre ω_{n moteur} de la motorisation. En dessous de ce seuil ω_{n moteur}, le ratio est constant, le couple est donc proportionnel au courant. Au-dessus de ce seuil, le ratio augmente selon une pente de 12 dB/octave. Le ratio augmente donc comme le carré de la fréquence. Le courant nécessaire à l'obtention d'un couple mécanique donné est proportionnel à ce couple multiplié par le carré de la fréquence. La fréquence propre ω_{n procédé} indicative du procédé considéré, ici le tube d'arme, est de l'ordre de 20 Hz. Dans la pratique il faudrait pour s'affranchir de ce phénomène, réaliser une motorisation dont la fréquence propre ω_{n moteur} de l'inertie du moteur sur l'élasticité de la transmission serait supérieure au triple de celle ω_{n procédé} du procédé. Ceci est difficile à réaliser en pratique. On constate encore à l'analyse de la courbe que le coût énergétique de la commande d'un couple donné est d'autant plus important que la valeur de la fréquence propre du procédé ω_{n procédé} s'éloigne de la valeur de la fréquence propre ω_{n moteur} de la motorisation.

La figure 6 présente dans le même système de coordonnées, l'effet sur ce même ratio entre le courant et le couple mécanique, du calage de la fréquence propre de la motorisation ω_{n moteur} sur la fréquence propre du procédé ω_{n procédé}. Ce calage encore appelé «accord», consiste à modifier les paramètres d'inertie du moteur et/ou de raideur de sa transmission en les choisissant tels que la fréquence propre ω_{n moteur} de l'inertie du moteur sur la raideur de la transmission, soit proche de la fréquence propre ω_{n procédé} du procédé considéré, en l'occurrence ici la fréquence propre ω_{n procédé} de premier mode du tube de l'arme 1. Cette courbe, ici réellement représentée, fait nettement apparaître un minimum du ratio au niveau de la fréquence propre de résonance du tube 1 de l'arme 27. Ce minimum apparaît dans la zone d'intérêt, puisque c'est autour de cette fréquence propre que l'on cherche le plus à amortir la résonance ω_{n procédé} du tube 1. Ce minimum peut faire apparaître un ratio inférieur dans un rapport N de l'ordre de quatre, au ratio nominal à l'origine. On en déduit l'intérêt d'un tel calage de la transmission sur le coût énergétique de la commande en amortissement, puisque l'on peut obtenir, dans la zone d'intérêt, un même couple d'amortissement pour un courant N fois moindre. Ceci montre tout l'intérêt qu'il peut y avoir à accorder la transmission sur la fréquence propre ω_{n procédé} du tube 1. Le courant, tant nominal que maximal étant un paramètre directement dimensionnant de la puissance d'un moteur électrique, le dispositif selon l'invention permet d'adopter pour l'amortissement d'un tube d'arme un moteur 6, 6' d'une puissance jusqu'à 4 fois inférieure à celle nécessaire si l'accord de la transmission n'avait pas été réalisé.

On comprend donc tout l'intérêt de l'invention de ne pas nécessiter de modification de la motorisation principale de pointage.

Le réducteur de la motorisation principale 2 ou 2', présente la particularité d'être dimensionné pour transmettre le couple maximum de dimensionnement de la motorisation. Malgré une organisation soignée de la chaîne de transmission, l'expérience montre que, sur une tourelle lourde, pour un besoin en couple d'accélération de l'ordre de 1 à 1,5 rd/s², l'élasticité de la motorisation fait apparaître une fréquence propre de l'inertie du moteur sur l'élasticité de la transmission qu'il est difficile d'augmenter au-delà de 6 Hz.

Comme la vitesse maximale désirée sur la charge est située autour de 0,6 à 0,7 rd/s, soit environ 6 à 7 tr/mn, pour des moteurs dont la vitesse de rotation est située entre 3500 et 4000 t/mn, on obtient un rapport de réduction à mettre en place dont l'ordre de grandeur est situé autour de 500. Dans ces conditions, il est difficile d'obtenir un système dont la fréquence propre du moteur sur l'élasticité de la transmission dépasse la vingtaine de Hz.

Le fait d'utiliser une motorisation secondaire 6 ou 6' permet de contourner cette difficulté.

De même, dans le cas d'une motorisation principale constituée d'un moteur couple, l'effet favorable de l'accord de la motorisation secondaire sur la consommation énergétique peut encore être exploité.

On conçoit donc qu'il est avantageux d'employer deux motorisations distinctes appliquant chacune leurs couples en parallèle, par exemple sur les secteurs dentés de chacun des axes site et gisement. Une seconde motorisation 6 (site) ou 6' (gisement), distincte de la première motorisation 2 ou 2' peut très avantageusement être envisagée. L'une des motorisations, est par exemple, chargée uniquement de l'amortissement, alors que l'autre est dédiée au pointage. Il est ainsi possible de dimensionner plus librement l'une et l'autre des motorisations en fonction de ses contraintes propres. On note aussi le réel avantage de combiner les deux aspects de l'invention : motorisations séparées et accord avec la fréquence de résonance ω_{n procédé} du tube 1.

## Revendications

1. Structure comprenant un dispositif d'amortissement actif des oscillations d'une arme (27) comprenant un tube (1) présentant une fréquence de résonance ω_{n procédé} à amortir et mis en rotation autour d'un axe site (3) ou gisement (3') par un motoréducteur principal (2, 2'), par rapport à une tourelle (4) ou un bâti, **caractérisé en ce que** le dispositif d'amortissement a une faible consommation énergétique et comprend un motoréducteur secondaire (6, 6') comprenant un moteur (8, 8') et une transmission (9, 9'), ledit motoréducteur secondaire (6, 6') appliquant en parallèle au motoréducteur principal (2, 2') un couple déterminé par une loi de commande (7, 7') et étant accordé avec le mode de résonance à amortir.

2. Structure selon la revendication 1, **caractérisé en ce que** la fréquence de résonance ω_{n moteur} de l'inertie du moteur (8, 8') sur l'élasticité de la transmission (9, 9') est proche de la fréquence de résonance ω_{n procédé} du tube (1).

3. Structure selon la revendication 1 ou 2, **caractérisé en ce que** la transmission (9, 9') du motoréducteur secondaire présente un jeu apparent vu du tube (1) inférieur à un centième de milliradian.

4. Structure selon la revendication 3, **caractérisé en ce que** la loi de commande (7, 7') comprend une première boucle (12) asservissant le motoréducteur (6, 6') secondaire en couple.

5. Structure selon la revendication 4, **caractérisé en ce que** la loi de commande (7, 7') comprend une seconde boucle (13) d'asservissement utilisant en entrée une vitesse d'arcure (32') du tube (1) mesurée par un capteur de vitesse d'arcure (20).

6. Structure selon la revendication 4, **caractérisé en ce que** la loi de commande (7, 7') comprend une seconde boucle d'asservissement (13) utilisant en entrée une vitesse d'arcure (32') estimée par un modèle de comportement (21) du tube (1) en flexion.

7. Structure selon la revendication 6, **caractérisé en ce que** le modèle de comportement (21) du tube en flexion estimant la vitesse d'arcure (32') comprend un gyromètre de masque (25) pour assurer le recalage du modèle d'estimation de la vitesse d'arcure.

## Claims

1. A structure comprising an active damping device for the oscillations of a weapon (27) comprising a barrel (1) having a resonance frequency ω_{n process} to be damped and made to rotate around an elevation axis (3) or traverse axis (3') by a main back-geared motor (2, 2'), with respect to a turret (4) or frame, **characterised in that** the damping device has low energy consumption and comprises a secondary back-geared motor (6, 6') comprising a motor (8, 8') and drive train (9, 9'), said secondary back-geared motor (6, 6') applying a torque in parallel to the main back-geared motor (2, 2') determined by a control law (7, 7') in accordance with the mode of resonance to be damped.

2. A structure according to Claim 1, wherein the resonance frequency ω_{n motor} of the motor's (8, 8') inertia on the elasticity of the drive train (9, 9') is close to the ω_{n process} of the barrel (1).

3. A structure according to Claim 1 or 2, wherein the drive train (9, 9') of the secondary back-geared motor has apparent play seen from the barrel (1) of less than a hundredth of a milliradian.

4. A structure according to Claim 3, wherein the control law (7, 7') comprises a first loop (12) servo-driving the secondary back-geared motor (6, 6') in torque.

5. A structure according to Claim 4, wherein the control law (7, 7') comprises a second servo loop (13) using as input an arcing rate (32') of the barrel (1) measured by an arcing rate sensor (20).

6. A structure according to Claim 4, wherein the control law (7, 7') comprises a second servo loop (13) using as input an arcing rate (32') estimated by a behaviour model (21) of the barrel (1) in flexion.

7. A structure according to Claim 6, wherein the behaviour model (21) for the barrel in flexion estimating the arcing rate (32') comprises a gyrometer on the shield (25) to readjust the arcing rate estimation model.

## Patentansprüche

1. Struktur umfassend eine Vorrichtung zur aktiven Dämpfung der Schwingungen einer Waffe (27), die ein Rohr (1) umfasst, das eine zu dämpfende Resonanzfrequenz ω_{n Verfahren} aufweist und durch einen primären Getriebemotor (2, 2') um eine vertikale (3) oder horizontale (3') Achse in Bezug auf einen Drehturm (4) oder ein Gestell in Drehung versetzt wird, **dadurch gekennzeichnet, dass** die Dämpfungsvorrichtung einen geringen Energieverbrauch hat und einen sekundären Getriebemotor (6, 6') umfasst, der einen Motor (8, 8') und ein Getriebe (9, 9') umfasst, wobei der sekundäre Getriebemotor (6, 6') parallel zum primären Getriebemotor (2, 2') ein Drehmoment aufbringt, das durch ein Regelgesetz (7, 7') bestimmt wird und mit dem Modus der zu dämpfenden Resonanz übereinstimmt .

2. Struktur nach Anspruch 1, **dadurch gekennzeichnet, dass** die Resonanzfrequenz ω_{n Motor} der Trägheit des Motors (8, 8') durch die Elastizität des Getriebes (9, 9') nahe der Resonanzfrequenz ω_{n Verfahren} des Rohres (1) ist.

3. Struktur nach Anspruch 1 oder 2, **dadurch gekennzeichnet, dass** das Getriebe (9, 9') des sekundären Getriebemotors ein vom Rohr (1) aus gesehenes scheinbares Spiel aufweist von kleiner als ein hundertstel Milliradian.

4. Struktur nach Anspruch 3, **dadurch gekennzeichnet, dass** das Regelgesetz (7, 7') eine erste Schleife (12) umfasst, die den sekundären Getriebemotor (6, 6') im Drehmoment regelt.

5. Struktur nach Anspruch 4, **dadurch gekennzeichnet, dass** das Regelgesetz (7, 7') eine zweite Regelungs-Schleife (13) umfasst, die als Eingang eine Winkelgeschwindigkeit (32') des Rohres (1) verwendet, welche von einem Winkelgeschwindigkeits-Sensor (20) gemessen wird.

6. Struktur nach Anspruch 4, **dadurch gekennzeichnet, dass** das Regelgesetz (7, 7') eine zweite Regelungs-Schleife (13) umfasst, die als Eingang eine Winkelgeschwindigkeit (32') verwendet, welche durch ein Modell (21) des Biegeverhaltens des Rohres (1) abgeschätzt wird.

7. Struktur nach Anspruch 6, **dadurch gekennzeichnet, dass** das die Winkelgeschwindigkeit (32') abschätzende Modell (21) des Biegeverhaltens des Rohres (1) ein Maskengyrometer (25) umfasst, um die Einstellung des Modells zur Abschätzung der Winkelgeschwindigkeit zu gewährleisten.
